Europäisches Patentamt

European Patent Office

Office européen des brevets

(19)

(11) Publication number: 0 348 337
A1

# EUROPEAN PATENT APPLICATION

(12)

(21) Application number: 89630108.2

(22) Date of filing: 22.06.89

(51) Int. Cl.⁴: E 05 F 11/52
B 60 J 1/17

(30) Priority: 22.06.88 US 209923

(43) Date of publication of application:
27.12.89 Bulletin 89/52

(84) Designated Contracting States:
DE ES FR GB IT SE

(71) Applicant: WICKES MANUFACTURING COMPANY
26261 Evergreen Road
Southfield Michigan 48076 (US)

(72) Inventor: Bauer, Barney J.
7210 Scenic Ridge
Clarkston,Michigan 48016 (US)

Buehler, William E.
2737 127th Street
Toledo Ohio 43611 (US)

(74) Representative: Weydert, Robert et al
OFFICE DENNEMEYER S.à.r.l. P.O. Box 1502
L-1015 Luxembourg (LU)

(54) Flush window regulator.

(57) A regulator is concerned for moving a window (16) in a vehicle door successively substantially vertically and horizontally to close the window (16), and in reverse to open the window (16). Once the window (16) is closed vertically the lower edge is moved outwardly horizontally to become substantially flush with the outside surface of the door of the vehicle. The regulator comprises a closed loop of cable (20) wrapped about a reversible driving drum (22) and having a vertical reach (28) which is attached to a pulley (52) connected to the window carrier (70). This pulley (52) is provided with a pair of diametrically opposite cam follower pins or rollers (56,57) that are guided in a vertical slot (40) parallel to the vertical reach (28) of cable (20). The slot (40) is bifurcated into diverging cam slots (46,47) at its upper end for rotating the pulley (52) as the cable means (20) continues to pull. The pulley (52) has a projection (60) with a helical groove (62) that receives a pin (76) carried by a window-mounting carrier (70) so that rotation of the pulley (52) moves the carrier (70) and lower edge of the window (16) horizontally. When the cable (20) pulls in the other direction the window (16) and carrier (70) are cammed inwardly horizontally before lowering the window carrier (70) to open the window (16).

Fig I

Fig III

Description

# FLUSH WINDOW REGULATOR

## BACKGROUND OF THE INVENTION

The known prior art regulators which move windows both horizontally and vertically often require separate driving means for the two different directions of motion. If a single driving means were employed, a lever or a cam projected orthogonally of the plane of movement of the window is employed, which is usually an arcuate movement. All of these known prior art mechanisms for regulators required considerable space for their installation and their operating mechanism, and thus did not fit compactly in the current thinner and curved-walled vehicle doors. Furthermore, the mechanisms employing levers often did not have positive movement in both directions in their horizontal planes, that is, orthogonal to the surface of the door or window. Still further, these mechanisms were often quite complicated.

## SUMMARY OF THE INVENTION

The window regulator of this invention is adapted for doors for vehicles having a smooth curved outer surface in which the windows are substantially flush with the outside surface when closed. Since the windows and the doors in such vehicles are curved, when the windows are opened they often require more space between the inner and outer panels of the door than flat windows and this limits the amount of space available for their regulator mechanisms, which thus need to be as compact as possible. Guides are usually required for the vertical edges of the window, including guides between the inner and outer panels of the lower door portion when the window is open or lowered. These guides also may be curved to conform with the curvature of the window and the adjacent outside surface of the vehicle body.

The regulator operator of such windows includes a closed loop cable means, which may be a wire or tape, that pulls in either direction and wraps around a drum reversible driven either manually or by a motor. This loop also has a guided vertical reach parallel to the window's vertical motion in opening and closing.

According to the present invention, there is provided a substantially vertical guide track having a vertical slot parallel to the vertical reach of the cable means, and conforming with the vertical motion of the window. The slot is bifurcated at its upper end into a pair of diverging cam slots lying in a plane parallel to that of the window movement. Attached to the vertical reach of the cable is a follower mechanism including a pulley having diametrical axially parallel pins, rollers or cam followers that fit in and move in the guide slot to prevent the pulley from rotating until it reaches the cam slots, at which time it is turned preferably between about 90° and 180° as the cables attached thereto continue to pull on the pulley during window raising. This follower also includes a projection having an external helical groove that engages a pin carried by a socket. This socket is mounted on the carrier that is fastened to the lower edge of the window.

Thus, as the follower mechanism moves vertically in its substantially vertical guide slot, the window correspondingly moves between open and closed positions. However, when the window is in its raised, or closed, position, continued pull on the cable rotates the follower mechanism to cam the lower edge of the window outwardly to a position substantially flush with the outside surface of the vehicle door. Correspondingly, reverse motion of the cable will reversely rotate the follower mechanism and cam the lower edge of the window inwardly to be clear of the outer door panel so that continued downward pull on the vertical reach of cable will pull the two cam followers of the follower mechanism into the vertical cam guide slot and retract the window into the door between its inner and outer lower door panels.

## OBJECTS AND ADVANTAGES

It is an object of this invention to produce a simple, efficient, effective, economic and compact flush window regulator mechanism.

Another object of this invention is to produce such a window regulator that moves a window vertically and then horizontally by means of the same driving force or means.

Still another object is to produce such a window regulator which is easy to operate, moves positively in all directions, and tightly seals the window when it is substantially flush with the outside body surface of the door or vehicle in which it is installed to give a smooth streamlined look to the vehicle.

## BRIEF DESCRIPTION OF THE VIEWS

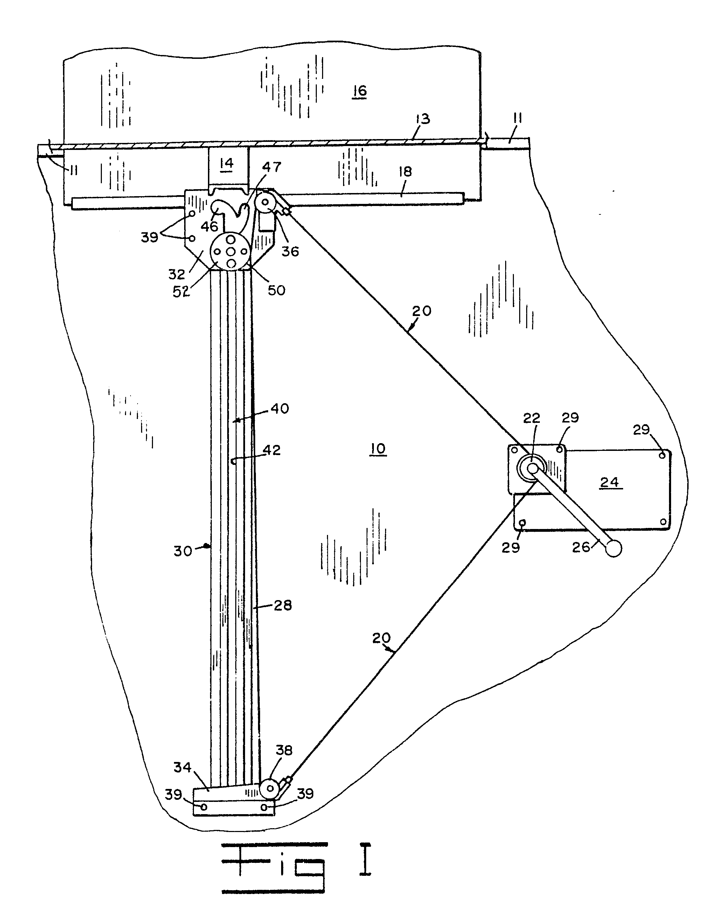

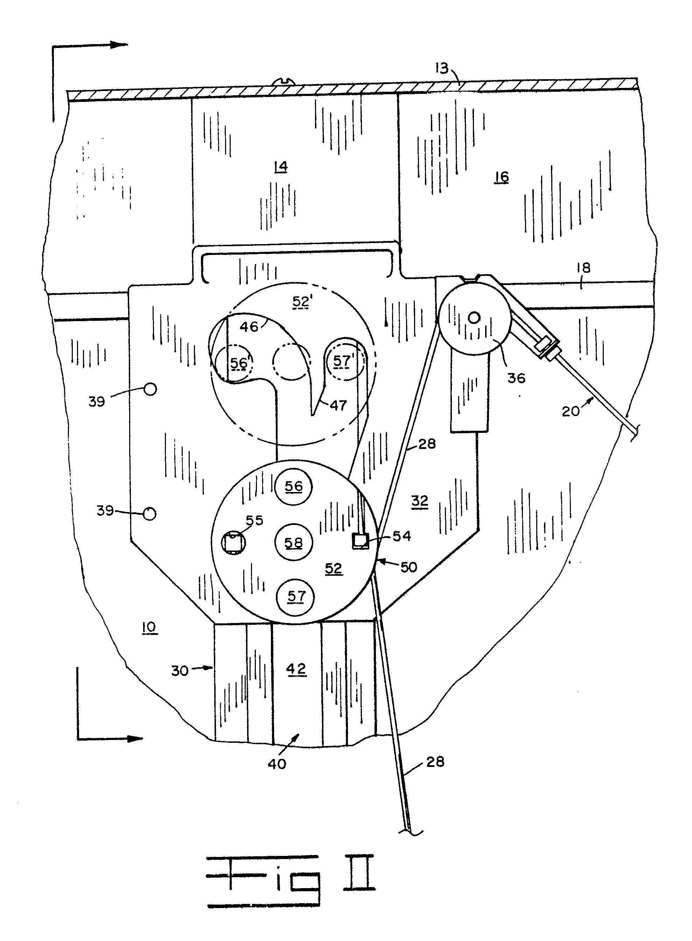

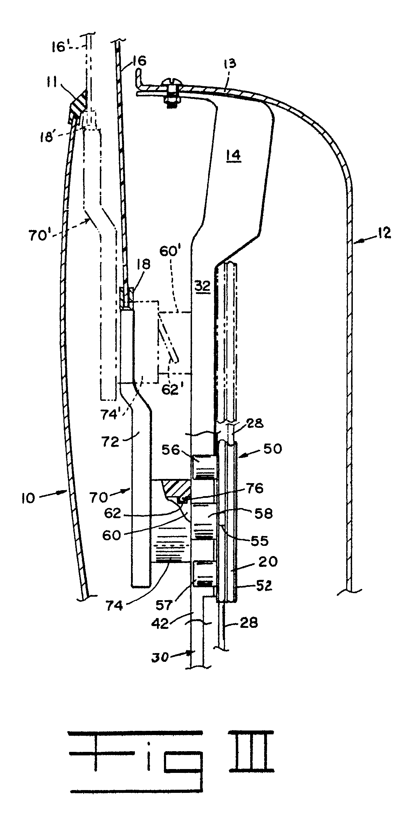

The above mentioned and other features, objects and advantages, and a manner of attaining them are described more specifically below by reference to an embodiment of this invention shown in the accompanying drawing wherein:

FIG. I is a side elevation of the flush window regulator according to a preferred embodiment of this invention with most of the door in which it is installed being broken away and only showing the lower part of the window that is attached to the regulator, which window is shown near its window-closed position;

FIG. II is an enlarged side elevational view of the bifurcated cam slots and follower mechanisms shown in Fig. I showing the diametrical cam follower pins in full lines just before entering the cam slots, and showing the pulley in dotted lines in the cam slots when the window is in its fully closed position and moved outwardly to be flush with the outside surface of the door and vehicle; and

FIG. III is an edge view looking from the left in Fig. II showing similarly in full lines the pulley with parts broken away to show its diametrical cam follower pins in full lines near its upper window-closed position, and showing the follower mechanism in dotted lines when the window is in its fully closed position substantially flush with the outside panel of the door.

## DETAILED DESCRIPTION OF PREFERRED EMBODIMENT

Since this invention is directed primarily to the mechanism for operating a window in a vehicle door, most of the conventional parts of the vehicle door have been broken away. However, in Figs. I-III, sections of the outer door panel 10 and inner door panel 12 have been shown, with the inner panel 12 being the base upon which the regulator mechanism parts are mounted. A bracket 14 is bolted at its upper end to the sill 13 of the inner door panel 12, which also forms the opening through which the window moves. Opposite the sill 13 is an upper plastic or rubber seal 11 which extends along the upper edge of the lower outer door panel 10 and the lower edge of the window opening. The lower portion of the window 16 is mounted in a U-shaped channel portion 18 of the carrier for the window which includes part of the regulator mechanism of this invention.

Referring now primarily to Fig. I, the regulator mechanism of this invention comprises a closed loop flexible cable means 20, a portion of which is wrapped around a driving drum 22. This drum 22 may be driven by an electric reversible motor 24 or by hand crank 26. Thus, all movements of the window are caused by the vertical movement of the cable. The closed loop 20 is also provided with a vertical reach 28 which is guided along a vertical guide track or bracket 30 parallel to said vertical reach 28. Upper and lower bracket portions 32 and 34 mount upper and lower guiding pulleys 36 and 38, respectively. Means 29 and 39 on the driving means 24 and vertical bracket ends 32 and 34 are provided for rigidly anchoring or fastening these parts to a frame or panel of the door. Sheaths, such as tubing, may be placed over the reaches of cable between the pulley 36 and drum 22, and pulley 38 and drum 22, if desired.

It should be understood that the vertical track 30 and its end portions 32 can be curved and/or angled from the true vertical to effectively parallel the travel of the window to the curvature of a vehicle door.

The improvements of this invention comprise the guide slot 40, the rotary cam follower mechanism 50 and the socketed window carrier 70 (see Fig. III), which are described in more detail below.

The guide slot 40 has a slot portion 42 extending along the full length of the vertical track 30. Slot 40 extends into the lower part of the upper end portion 32, where it is bifurcated into diverging cam slots 46 and 47 (see Fig. II).

The cam follower mechanism 50 comprises a double-grooved pulley 42 (see Fig. III) into one groove of which one end of the closed loop of cable means 20 is anchored in notch 54 to wrap around the pulley 52 counterclockwise (Fig. II), and comprise part of the upper extension of the vertical reach 28. The other end of the cable means 26 and the shorter end of vertical reach 28 is attached to the other opposite side of the pulley 42 in notch 55 and is wrapped clockwise (Fig. II) partly around the other parallel groove in the pulley 52.

Also diametric of the pulley 42, orthogonal to notches 54 and 55, are cam followers in the form of pins or rollers 56 and 57 (*see Figs. II and III) which move in the guide slot 40, to impart vertical movement to the window when in the slot portion 42. The followers are moved into cam slots 46 and 47, respectively, as shown in dotted lines and primed numbers 52′, 56′ and 57′ in Fig. II, to move the lower edge of the window horizontally as will now be described.

Follower mechanism 50 mounts a cylindrical shaft 58 axial of the axis of pulley 52 and parallel to the axes of the cam followers 56 and 57. The shaft 58 is rigidly connected to a cylindrical projection 60 (see Fig. III) which has an external helical slot 62.

Referring now to Fig. III, carrier 70 comprises a bracket 72 connected to the window channel 18 rigidly mounting a socket 74 which journals the cylindrical projection 60. This socket 74 has an internal pin or cam follower 76 that is received in helical slot 62. Thus, rotation of projection 60 moves pin 76 and socket 74 horizontally. Depending on direction of rotation, this moves carrier 70 and window channel toward or away from the pulley 52.

Thus, as the cam follower mechanism 50 reaches the top of the vertical slot 42, continued pull on the upper reach of cable means 20 forces the cam followers 56 and 57 into the cam slots 46 and 47, respectively. This rotates projection 60 anti-clockwise (Fig. II) from 90° to about 180° to move the lower edge of the window outwardly to the dotted line position shown in Fig. III. Although the pitch of groove 62 is shown to be about 30°, it can be varied to accomplish desired results. The dotted line position, indicated by primed numbers 16′, 18′, 70′, 74′, 70′ and 62′, shows how the window 16 is moved to a position substantially flush with the outer surface of the door panel 10 to seal against the rubber or plastic strip 11 around the window opening in the door. Correspondingly, reverse movement of cable means 20 will reverse the above-described movement and move carrier 70 back toward the vertical guide track 30 and away from the window seal 11. Continued downward movement of vertical reach 28 will open or lower the window 16 into the space between the inner and outer door panels.

Accordingly, the mechanism of this invention positively moves the window vertically, then horizontally, to close the window; it then moves horizontally, then vertically to open the window of a vehicle in a door or other body, such as a vehicle, by means of a single reversible drive motor or manual crank. Movement of the drive means in one direction as the window reaches raised position moves the lower edge of the window outwardly to a flush position and movement in the opposite direction moves the lower edge of the window inwardly and lowers the window.

Elements of the regulator of this invention may be composed of metal or plastic, or both, and the cable means may be of wire, plastic cord, tape, or other material which has sufficient strength. A mechanism may be provided for maintaining the cable means taut at all times, such as a spring inside the drum 22 or a spring-biased idler pulley against a reach of the cable. Although this mechanism has been described as an operator for a window in a door of a vehicle, it also may be used in other bodies for moving panels other than windows where successive orthogonal motions are required that are positive in both directions.

While there is described above the principles of this invention in connection with specific apparatus, it is to be clearly understood that this description is made only by way of example and not as a limitation to the scope of this invention.

## Claims

1. A drive mechanism for moving the lower edge of a window vertically and horizontally in a housing, comprising a substantially vertical guide track having a guide slot, a carrier mounting the lower edge of the window, a follower mechanism having means confined within the slot, connecting means connecting the carrier and follower mechanism, and drive means attached to the follower mechanism for moving the follower mechanism within the slot to move the window between raised and lowered positions, characterized by the guide slot being bifurcated at its upper end into diverging cam slots, the follower mechanism including spaced upper and cam followers confined within the slot, and the connecting means comprising a rotary cam actuator for moving the carrier horizontally of the guide track upon rotation of the follower mechanism, such that movement of the upper cam follower into one of the cam slots effects rotation of the follower mechanism, forcing the lower cam follower into the other cam slot to further rotate the follower mechanism and move the carrier and window horizontally relative to the guide track as the window reaches raised position.

2. The drive mechanism of Claim 1, further characterized by the follower mechanism having a circular exterior surface and the drive means comprising a cable wrapped about the circular surface, a pulley mounted at both the upper and lower ends of the guide track for engaging the cable, and a cable operator driving the cable in one direction to rase the window and rotate the follower mechanism to move the window away from the track as the window reaches raised position, and for driving the cable in the other direction to reversely rotate the follower mechanism to move the window toward the track and lower the window.

3. The drive mechanism of Claim 1, further characterized by the rotary cam actuator comprising cooperating helical cam means carried by the carrier and follower mechanism.

4. The drive mechanism of Claim 3, further characterized by the cooperating helical cam means comprising a cylindrical member having an external helical groove mounted on the follower mechanism and a pin carried by the carrier and drivingly engaging the groove.

5. The drive mechanism of Claim 2, further characterized by the rotary cam actuator comprising cooperating helical cam means carried by the carrier and follower mechanism.

6. The drive mechanism of Claim 5, further characterized by the cooperating helical cam means comprising a cylindrical member having an external helical groove mounted on the follower mechanism and a pin carried by the carrier and drivingly engaging the groove.

Fig I

13

14

16

18

52'

46

56

57'

47

39

39

56

55

58

54

50

52

28

36

20

32

10

30

42

40

28

Fig II

Fig III

# DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 979 327  (SWANSON)<br>* Claims; figures *<br>--- | 1 | E 05 F  11/52<br>B 60 J   1/17 |
| A | GB-A-2 186 631  (NISSAN MOTOR CO. LTD)<br>* Abstract; figures *<br>--- | 1-3 | |
| A | GB-A-2 150 624  (TALBOT MOTOR CO. LTD)<br>* Abstract *<br>--- | 1 | |
| A | NL-C-   1 166  (SOCIETE RHEIMS & AUSCHER)<br>* Figures *<br>--- | 2-5 | |
| A | FR-A-2 279 581  (GENERAL MOTORS CORP.)<br>----- | | |

TECHNICAL FIELDS
SEARCHED (Int. Cl.4)

E 05 F
B 60 J

The present search report has been drawn up for all claims

| Place of search | Date of completion of the search | Examiner |
|---|---|---|
| THE HAGUE | 20-09-1989 | VAN GESTEL H.M. |

FPO FORM 1503 03.82 (P0401)